# EUROPÄISCHE PATENTSCHRIFT

(11) **EP 3 979 035 B1**
(45) Veröffentlichungstag und Bekanntmachung des Hinweises auf die Patenterteilung: **01.11.2023**
(21) Anmeldenummer: 20199332.6
(22) Anmeldetag: 30.09.2020
(51) Int. Cl.: G05D 16/20, F16K 31/00

(54) **DOMDRUCKREGLER**
DOME PRESSURE REGULATOR
RÉGULATEUR DE PRESSION DU DÔME

(43) Veröffentlichungstag der Anmeldung: 06.04.2022
(73) Patentinhaber: Witt GmbH & Co. Holding und Handels-KG, 58454 Witten (DE)
(72) Erfinder: BENDER, Martin, 44267 Dortmund (DE)
(74) Vertreter: Schneiders & Behrendt Bochum

(56) Entgegenhaltungen:
- EP-A1- 2 237 128
- WO-A1-00/36482
- WO-A1-2017/191171
- DE-A1-102019 104 067
- DE-T2- 60 005 840
- US-A1- 2008 023 662

## Beschreibung

Die Erfindung betrifft einen Domdruckregler zum Regeln von Gasdruck und/oder Gasfluss in einer Gasleitung, mit mindestens einem Gehäuse, wobei das Gehäuse mindestens einen Gaseingang zum Anschluss an einen eingangsseitigen Abschnitt der Gasleitung und mindestens einen Gasausgang zum Anschluss an einen ausgangseitigen Abschnitt der Gasleitung aufweist, wenigstens zwei Druckkammern in dem Gehäuse, wobei die Druckkammern durch eine flexible Membran voneinander getrennt sind, wobei die erste Druckkammer mit einem einstellbaren Steuerdruck beaufschlagbar ist und wobei die zweite Druckkammer mit dem Gasausgang fluidtechnisch in Verbindung steht, wenigstens einem Regelventil mit einem beweglichen Ventilkörper zum Öffnen und Schließen einer Ventilöffnung, über welche der Gaseingang mit dem Gasausgang verbindbar ist, wobei der Ventilkörper mit der Membran verbunden ist, sodass eine Bewegung der Membran auf den Ventilkörper übertragen wird, um den Gasdruck am Gasausgang nach Maßgabe des einstellbaren Steuerdrucks in der ersten Druckkammer zu regeln, und wenigstens einem Entlüftungsventil zur Entlüftung der ersten Druckkammer.

Ein solcher Domdruckregler ist aus GB 447,519 A bekannt. Nachteilig an dem hier beschriebenen Domdruckregler ist, dass die erste Druckkammer nur bei Überschreitung eines einstellbaren Maximaldrucks in der Kammer entlüftet werden kann und ein Schließen der Ventilöffnung ansonsten nur über den Druck in der zweiten Kammer bewirkt wird, die fluidtechnisch mit dem Gasausgang in Verbindung steht.

Bei den aus DE 600 05 840 T2 und US 2008/0023662 A1 bekannten Reglern besteht das Problem, dass deren erste Druckkammer nicht entlüftet werden kann, da diese über Ventile fluidtechnisch mit dem Gaseigang und dem Gauausgang in Verbindung steht, während eine über eine Membran von der ersten Druckkammer abgetrennte, zweite Druckkammer ebenfalls mit dem Gasausgang fluidtechnisch in Verbindung steht.

Ein weiterer Domdruckregler ist aus WO 2017/191171 A1 bekannt, der über Druck-/Temperatursensoren verfügt sowie einen Wegsensor, durch den der Hub des Ventilkörpers messbar ist, und eine in das Gehäuse integrierte Sensorik-Auswerteeinheit. Auch der hier beschriebene Domdruckregler bietet keine Möglichkeit, schnell und automatisch das vorhandene Regelventil zu schließen.

Die EP 2 237 128 A1 offenbart eine vorgesteuerte Druckproportionalventilanordnung mit einer durch eine elektronische Regelungseinrichtung angesteuerten Vorsteuerstufe und einer ein Ventilglied aufweisenden druckgeregelten Hauptstufe.

Die DE 10 2019 104067 A1 zeigt ein elektrisch gesteuertes Proportionalventil, das eine Dekompressionskammer aufweist, die mit einem Führungskanal, einem Auslasskanal und einem Sensorkanal verbunden ist, wobei in der Dekompressionskammer eine Hauptmembran mit einem Rückschlagventil angeordnet ist.

In WO 00/36482 A1 ist ein Druckregler gemäß dem Oberbegriff des Anspruchs 1 offenbart. Nachteilig an dem hier beschriebenen Druckregler ist, dass dieser nicht schnell auf sich ändernde Gastemperaturen oder sich schnell erhöhende Volumenströme reagiert.

Es ist daher Aufgabe der Erfindung, einen verbesserten Domdruckregler anzugeben, der eine effektive, fehlerunanfällige und schnelle Möglichkeit bietet, das Regelventil des Domdruckreglers automatisch zu schließen.

Gelöst wird diese Aufgabe durch einen Domdruckregler mit den Merkmalen des Anspruchs 1.

Durch eine elektronische Steuereinheit, wobei das Entlüftungsventil über die Steuereinheit zur Entlüftung der ersten Druckkammer ansteuerbar ausgebildet ist, kann schnell und automatisch durch die Entlüftung der ersten Kammer eine Bewegung der Membran ausgelöst werden, die ein Schließen der Ventilöffnung durch den Ventilkörper bewirkt. Mit der Möglichkeit der automatischen Entlüftung der ersten Druckkammer durch die aktive Ansteuerung und Öffnung des Entlüftungsventils kann fehlerunanfällig und effektiv das Regelventil geschlossen werden. Dies kann je nach Einsatzgebiet des Domdruckreglers erforderlich sein, sofern die ausgangsseitig angeschlossene Gasleitung einen Fehler aufweist oder Wartungen an dem ausgangsseitigen Abschnitt der Gasleitung oder dem nachgeordneten Systemen durchgeführt werden sollen. In diesen Fällen dient das Regelventil des Domdruckreglers als einfaches, automatisches, über die Ansteuerung der elektronischen Steuereinheit betätigbares Absperrventil. Mit der elektronischen Steuereinheit kann sehr einfach und automatisch durch Ansteuerung des Entlüftungsventils und Entlüftung der ersten Druckkammer durch Öffnung des Entlüftungsventils die Regelung von Gasdruck und/oder Gasfluss in der Gasleitung durch Verschließen der Ventilöffnung des Regelventils durch den Ventilkörper unterbrochen werden. Hierdurch bietet der erfindungsgemäße Domdruckregler eine einfache Möglichkeit, die Gasleitung durch Schließen des Regelventils abzusperren.

Gemäß einer ersten Variante der der Erfindung ist ein Temperatursensor zur Erfassung der Temperatur des Gases in dem Gehäuse oder in der Gasleitung vorgesehen, wobei die Steuereinheit dazu eingerichtet ist, das Entlüftungsventil zur Entlüftung der ersten Druckkammer anzusteuern, sofern der Temperatursensor eine Unterschreitung eines Schwellwertes der Gastemperatur erfasst, um die Ventilöffnung mit dem Ventilkörper des Regelventils zu verschließen. Mit der Erfassung der Temperatur des Gases in dem Gehäuse oder in der Gasleitung kann sehr schnell auf sich ändernde Gastemperaturen reagiert werden. Vorteilhafterweise ist die Steuereinheit in der Lage, das Entlüftungsventil zur Entlüftung der ersten Druckkammer anzusteuern, um bei Unterschreitung eines Schwellwertes für die Gastemperatur die Gasleitung automatisch abzusperren, indem das Regelventil geschlossen wird. Hierdurch kann vorteilhafterweise eine Versprödung und im schlimmsten Fall ein Bersten der Gasleitung verhindert werden, da ein Absinken der Temperatur in der Gasleitung wirksam durch das automatische Schließen des Regelventils verhindert werden kann. Der Schwellwert bei dessen Unterschreitung die Steuereinheit die erste Druckkammer entlüftet, sollte abhängig von Einsatzgebiet des Domdruckreglers und der verwendeten Gasleitung gewählt werden, um eine wirksame Absicherung durch die automatische Absperrung zu erreichen. Die Anordnung des Temperatursensors in dem Gehäuse des Domdruckreglers ermöglicht einen einfachen und kompakten Aufbau.

Gemäß einer zweiten bzw. dritten Variante sieht die Erfindung alternativ oder zusätzlich zum Temperatursensor einen Volumenstromsensor zur Erfassung des Volumenstroms des geregelten Gases in dem Gehäuse oder in der Gasleitung vor, wobei die Steuereinheit dazu eingerichtet ist, das Entlüftungsventil zur Entlüftung der ersten Druckkammer anzusteuern, sofern der Volumenstromsensor eine Überschreitung eines Schwellwertes des Volumenstroms erfasst, um die Ventilöffnung mit dem Ventilkörper des Regelventils zu verschließen. Durch die Erfassung des Volumenstromes des Gases in dem Gehäuse oder in der Gasleitung kann sehr schnell auf erhöhte Volumenströme reagiert werden. Vorteilhafterweise ist die Steuereinheit in der Lage, das Entlüftungsventil zur Entlüftung der ersten Druckkammer anzusteuern, um bei Überschreitung eines Schwellwertes für den Volumenstrom die Gasleitung automatisch abzusperren, indem das Regelventil geschlossen wird. Hierdurch kann vorteilhafterweise eine Versprödung und im schlimmsten Fall ein Bersten der Gasleitung verhindert werden, da mit dem erhöhten Volumenstrom ein Absinken der Temperatur in der Gasleitung erfolgen kann, was wirksam durch das automatische Schließen des Regelventils verhindert werden kann. Der Schwellwert bei dessen Überschreitung die Steuereinheit die erste Druckkammer entlüftet, sollte abhängig von Einsatzgebiet des Domdruckreglers und der verwendeten Gasleitung gewählt werden, um eine wirksame Absicherung durch die automatische Absperrung zu erreichen. Die Anordnung des Volumenstromsensors in dem Gehäuse des Domdruckreglers ermöglicht einen einfachen und kompakten Aufbau.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Eine besonders vorteilhafte Ausführung der Erfindung bezieht sich darauf, dass ein Display zum Ablesen einer erfassten Gastemperatur und/oder eines erfassten Volumenstroms vorgesehen ist. Über das Display können beispielsweise leicht die Temperatur- und/oder Volumenströme zum Zeitpunkt der automatischen Absperrung ablesbar gemacht werden, um die Fehlersuche in mit dem Domdruckregler ausgestatteten System zu vereinfachen.

Eine besonders vorteilhafte Ausführung der Erfindung sieht vor, dass zwischen der Steuereinheit und den Sensoren eine Signalverbindung besteht. Diese Signalverbindung kann kabelgebunden oder drahtlos, beispielsweise über eine Funkstrecke realisiert werden. Über die Signalverbindung zwischen der Steuereinheit und den Sensoren können von den Sensoren erfasste Daten, beispielsweise die Temperatur- und/oder Volumenströme des Gases, an die Steuereinheit übermittelt werden.

Eine vorteilhafte Ausführung der Erfindung sieht vor, dass die Steuereinheit eine Datenschnittstelle zur Kommunikation mit einem externen Endgerät aufweist. Über eine solche Datenschnittstelle können Temperatur- und/oder Volumenströme des Gases, also erfasste Sensordaten des Temperatursensors oder des Volumenstromsensors an das externe Endgerät übermittelt werden. Außerdem kann bei einer automatischen Absperrung der Gasleitung durch den Domdruckregler über die Datenschnittstelle eine Alarmmeldung auf das externe Endgerät übermittelt werden.

Besonders vorteilhaft ist eine Ausführungsform, die vorsieht, dass das Entlüftungsventil ein elektrisch ansteuerbares 2/2-Wege-Magnetventil ist. Mit einem elektrisch ansteuerbaren 2/2-Wege-Magnetventil ist eine einfache und schnelle Möglichkeit gegeben durch Ansteuerung des Entlüftungsventils die erste Druckkammer zu entlüften, um die Gasleitung zügig automatisch abzusperren.

Eine vorteilhafte Ausgestaltung sieht vor, dass die Steuereinheit in einem von dem Gehäuse separaten, insbesondere an das Gehäuse ankoppelbaren Schaltkasten angeordnet ist. Der Schaltkasten kann mit dem Gehäuse eine Montageeinheit bilden, aber der separate Schaltkasten kann auch als Modul nachgerüstet werden. Außerdem bietet die Anordnung der Steuereinheit in dem separaten Schaltkasten eine einfache Möglichkeit, um für Varianten leicht weitere Abänderungen vornehmen zu können.

Gemäß einer bevorzugten Ausgestaltung der Erfindung ist vorgesehen, dass das Entlüftungsventil in einem von dem Gehäuse separaten, insbesondere an das Gehäuse ankoppelbaren Ventilkasten angeordnet ist. Der Ventilkasten kann mit dem Gehäuse eine Montageeinheit herstellen, ansonsten kann der separate Ventilkasten auch als Modul nachgerüstet werden. Ferner bietet die Anordnung des Entlüftungsventils in dem separaten Ventilkasten eine einfache Option, um für Varianten einfach weitere Abänderungen vornehmen zu können.

Besonders vorteilhaft ist eine Ausführungsform, die vorsieht, dass zwischen der Steuereinheit im Schaltkasten und dem Entlüftungsventil im Ventilkasten eine Signalverbindung besteht. Diese Signalverbindung kann kabelgebunden oder drahtlos, beispielsweise über eine Funkstrecke realisiert werden. Über die Signalverbindung zwischen der Steuereinheit und dem Entlüftungsventil kann der Schaltbefehl zur Entlüftung der ersten Druckkammer, aber gegebenenfalls auch die aktuelle Schaltstellung des Entlüftungsventils übermittelt werden.

Weitere Merkmale, Einzelheiten und Vorteile der Erfindung ergeben sich aufgrund der nachfolgenden Beschreibung sowie anhand der Zeichnungen, die ein Ausführungsbeispiel der Erfindung zeigen. Einander entsprechende Gegenstände oder Elemente sind in allen Figuren mit den gleichen Bezugszeichen versehen. Es zeigen:
- Figur 1: erfindungsgemäßer Domdruckregler,
- Figur 2: Domdruckregler aus anderer Perspektive,
- Figur 3: Seitenansicht auf den Domdruckregler,
- Figur 4: Schnittansicht des Domdruckreglers,
- Figur 5: Ansicht von unten auf den Domdruckregler, und
- Figur 6: weitere Schnittansicht des Domdruckreglers.

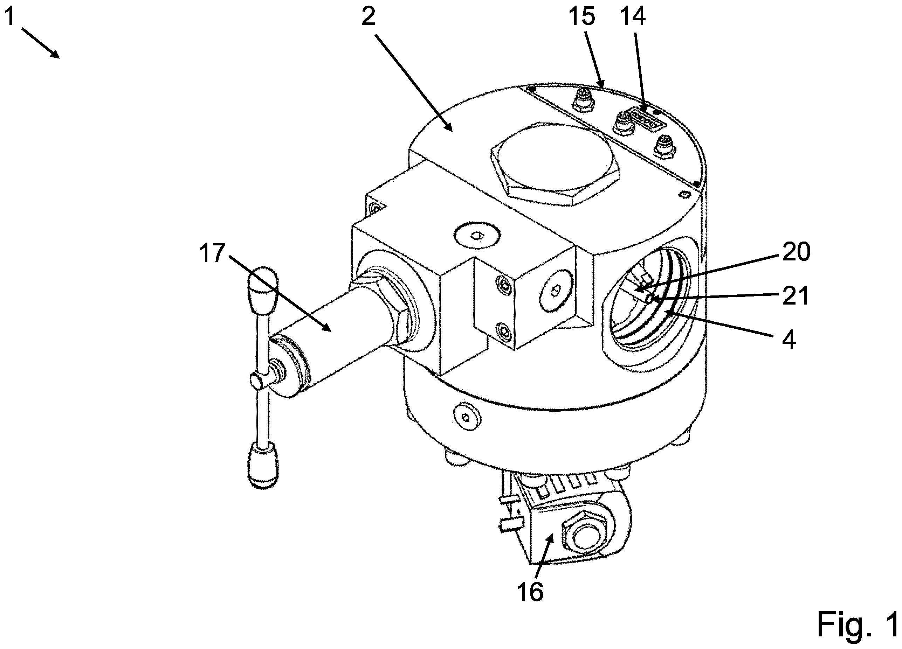

In den Figuren mit dem Bezugszeichen 1 bezeichnet ist ein erfindungsgemäßer Domdruckregler dargestellt. Der Domdruckregler 1 dient zum Regeln von Gasdruck und/oder Gasfluss in einer nicht dargestellten Gasleitung. Der in den Figuren gezeigte Domdruckregler 1 weist ein mehrteiliges Gehäuse 2 auf. Das Gehäuse 2 bildet einen Gasausgang 4 zum Anschluss an einen ausgangseitigen Abschnitt der Gasleitung, der in Figur 1 zu sehen ist. Der Domdruckregler 1 verfügt über einen an das Gehäuse 2 gekoppelten Ventilkasten 16 mit einem Entlüftungsventil 11, dessen Funktion im Folgenden noch näher erläutert wird. An dem Gehäuse 2 des Domdruckreglers 1 ist außerdem ein Schaltkasten 15 angekoppelt, der im Folgenden noch näher beschrieben wird. An dem Gehäuse 2 ist außerdem ein Antrieb 17 vorgesehen. Dieser Antrieb 17 wird in diesem Ausführungsbeispiel manuell betrieben. Ein elektrischer oder pneumatischer Antrieb wäre aber ebenfalls möglich. Über den Antrieb 17 kann ein Steuerdruck eingestellt werden. Als Steuergas kann entweder das zu regelnde Gas oder ein separates Gas eingesetzt werden.

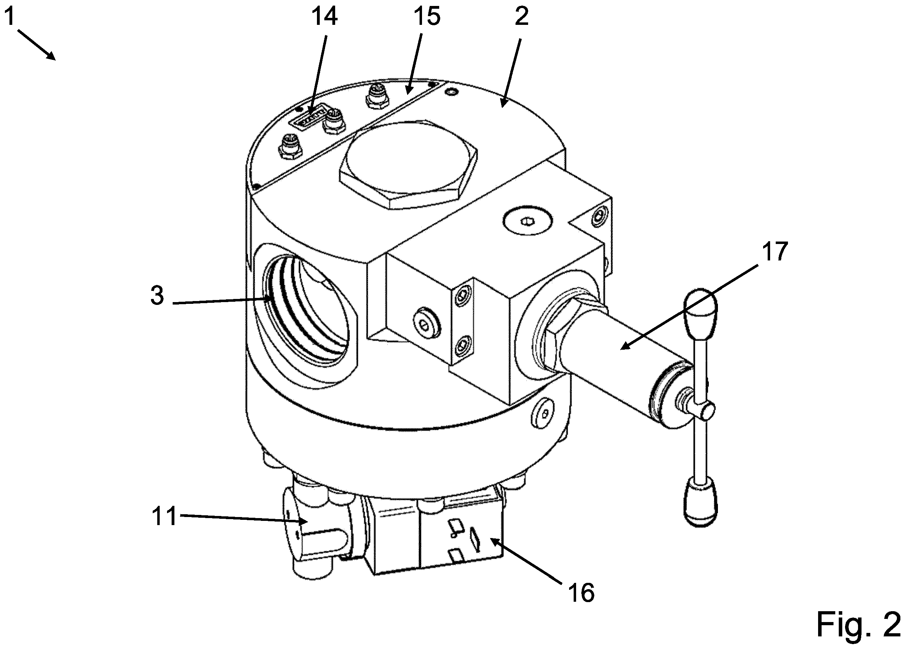

Der auf der gegenüberliegenden Seite des Gasausgangs 4 im Gehäuse 2 angeordnete Gaseingang 3 zum Anschluss an einen eingangsseitigen Abschnitt der Gasleitung ist in Figur 2 zu sehen.

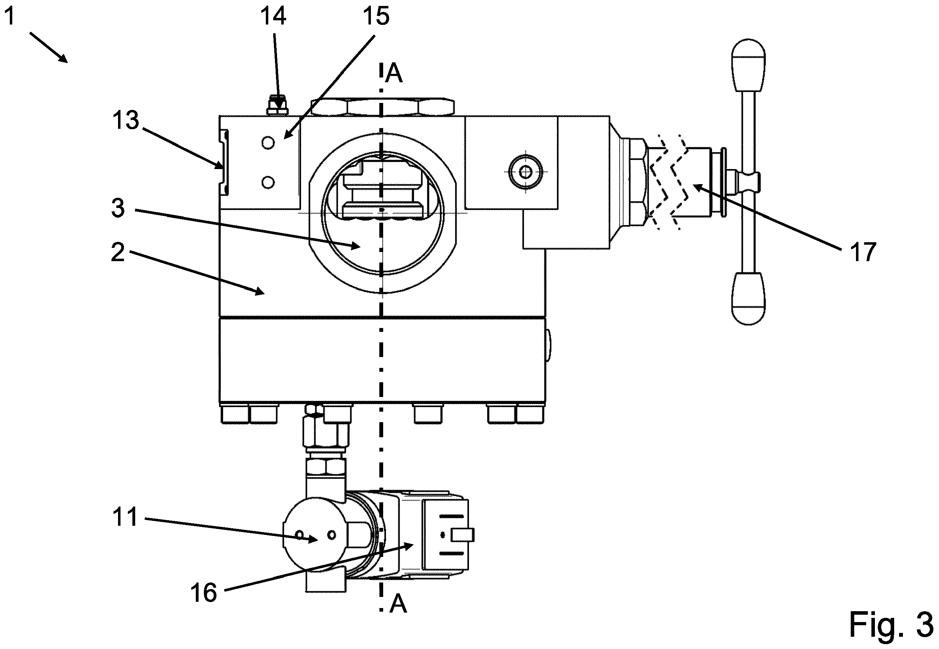

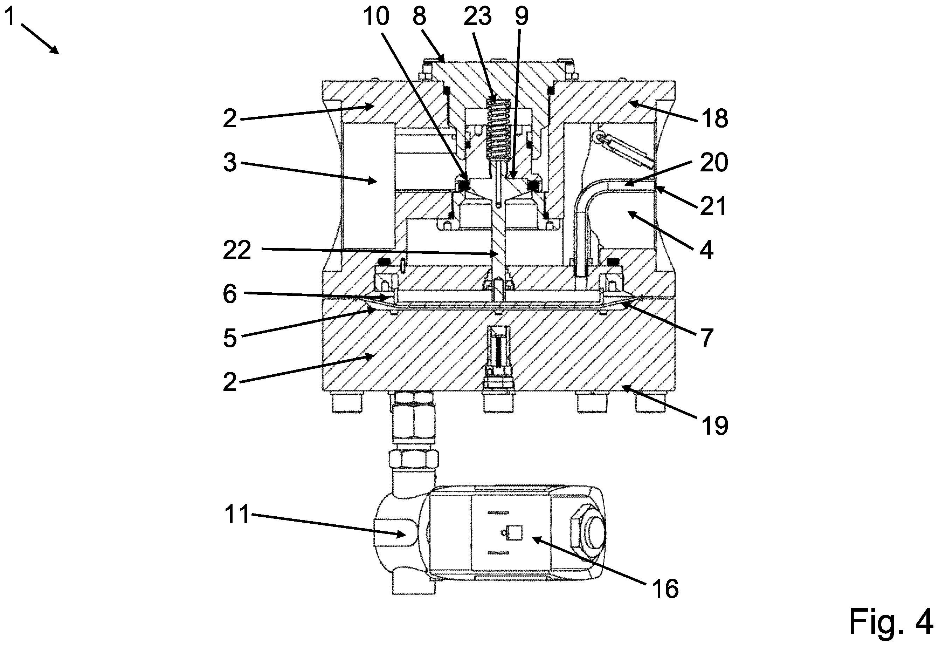

Dieser Gaseingang 3 ist auch in Figur 3 gezeigt, die eine Seitenansicht auf den Domdruckregler 1 darstellt. In dieser Seitenansicht ist außerdem eine Schnittebene A-A durch den Domdruckregler 1 angedeutet, welche der Schnittdarstellung in Figur 4 entspricht.

Die Figur 4 stellt eine Schnittansicht durch die Schnittebene A-A gemäß Figur 3 dar. In der Schnittansicht ist zu erkennen, dass zwischen dem Gaseingang 3 und dem gegenüberliegenden Gasausgang 4 ein Regelventil 8 in dem Gehäuse 2 des Domdruckreglers 1 angeordnet ist. Das Regelventil 8 verfügt über einen beweglichen Ventilkörper 9 zum Öffnen und Schließen einer Ventilöffnung 10, über welche der Gaseingang 3 mit dem Gasausgang 4 verbindbar ist. So kann über das Regelventil 8 der Gasfluss und/oder der Gasdruck in der an den Domdruckregler 1 angeschlossenen Gasleitung geregelt werden. In dem Gehäuse 2 des Domdruckreglers 1 sind zwei Druckkammern 5, 6 gebildet. Die beiden Druckkammern 5, 6 sind durch eine flexible Membran 7 voneinander getrennt, die vorteilhafterweise zwischen den Gehäuseteilen 18, 19 des Domdruckreglergehäuses 2 eingeklemmt ist. Die erste Druckkammer 5 ist mit einem einstellbaren Steuerdruck beaufschlagbar. Dieser Steuerdruck kann über den Antrieb 17 eingestellt werden. Die zweite Druckkammer 6 hingegen steht fluidtechnisch mit dem Gasausgang 4 in Verbindung. Im gezeigten Ausführungsbeispiel führt hierzu ein abgewinkeltes Rohr 20 von der zweiten Druckkammer 6 in den Bereich des Gasausgangs 4. Im Ausführungsbeispiel ist das abgewinkelte Rohr 20 so in dem Gasausgang 4 angeordnet, dass die Rohröffnung 21 im Gasausgang 4 von der Strömungsrichtung des Gases in der anzuschließenden Gasleitung weg zeigt. Der Ventilkörper 9 des Regelventils 8 ist über einen Stößel 22 mit der Membran 7 verbunden. In dem Regelventil 8 ist außerdem eine Druckfeder 23 vorgesehen, welche den Ventilkörper 9 gegen die Ventilöffnung 10 drückt, um die Ventilöffnung 10 mittels Federkraft zu verschließen. Die mit dem Ventilkörper 9 verbundene Membran 7 kann entgegen dieser Federkraft eine Bewegung auf den Ventilkörper 9 übertragen. Über diese von der Membran 7 ausgelöste Bewegung kann der Gasdruck am Gasausgang 4 nach Maßgabe des einstellbaren Steuerdrucks in der ersten Druckkammer 5 geregelt werden. Die Bewegung der flexiblen Membran 7, welche auf den Ventilkörper 9 übertragen wird, entsteht durch einen Druckausgleich, der sich zwischen den beiden Druckkammer 5, 6 fortwährend einstellt. In der in Figur 4 gezeigten Stellung verschließt der Ventilkörper 9 die Ventilöffnung 10 und sperrt hierdurch die Verbindung zwischen dem Gaseingang 3 und dem Gasausgang 4 über das Regelventil 8 ab. Die Druckfeder 23 drückt hierbei den Ventilkörper 9 gegen den die Ventilöffnung 10 bildenden Ventilsitz. Hierzu wurde die zur Öffnung des Regelventils 8 mit Steuerdruck beaufschlagte, erste Druckkammer 5 über ein Entlüftungsventil 11 entlüftet. Im gezeigten Ausführungsbeispiel ist das Entlüftungsventil 11 zur Entlüftung der ersten Druckkammer 5 in einem Ventilkasten 16 angeordnet, welcher mit dem Gehäuse 2 des Domdruckreglers 1 verbunden ist. Über die Entlüftung der ersten Druckkammer 5 wird die Membran 7 durch die Federkraft der Druckfeder 23 und/oder durch den Druck in der zweiten Druckkammer 6 in die gezeigte Stellung bewegt. Hierdurch deckt der Ventilkörper 9 des Regelventils 8 die Ventilöffnung 10 ab und verschließt die Verbindung zwischen Gaseingang 3 und Gasausgang 4 im Domdruckregler 1. Dadurch ist über die Entlüftung der ersten Druckkammer 5 eine Absperrung der Gasleistung durch das Regelventil 8 möglich.

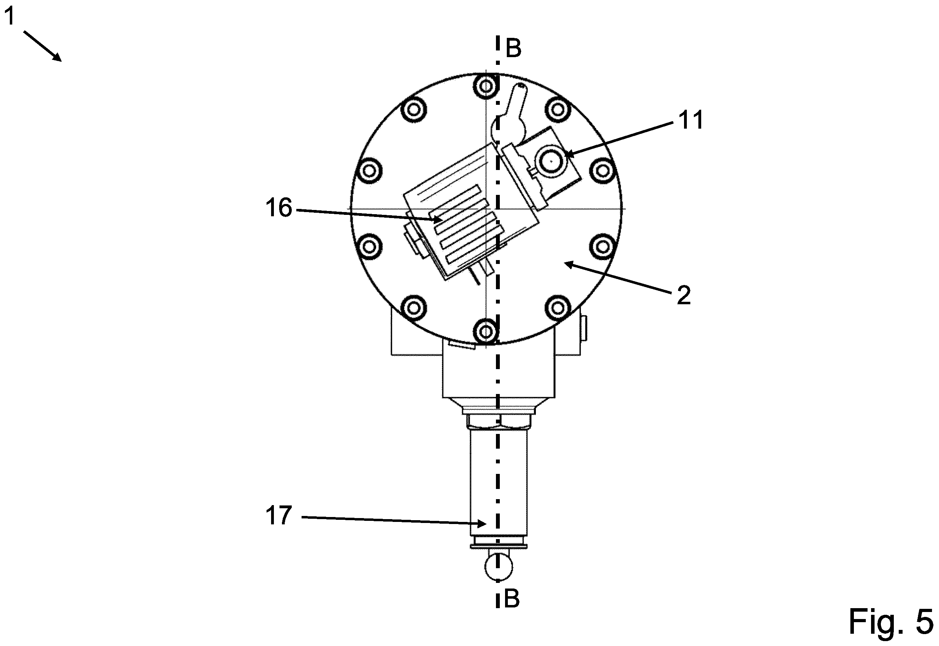

Die Figur 5 zeigt den Domdruckregler 1 gemäß der Figuren 1 bis 4 in einer Ansicht von unten. In dieser Darstellung ist eine Schnittebene B-B eingezeichnet.

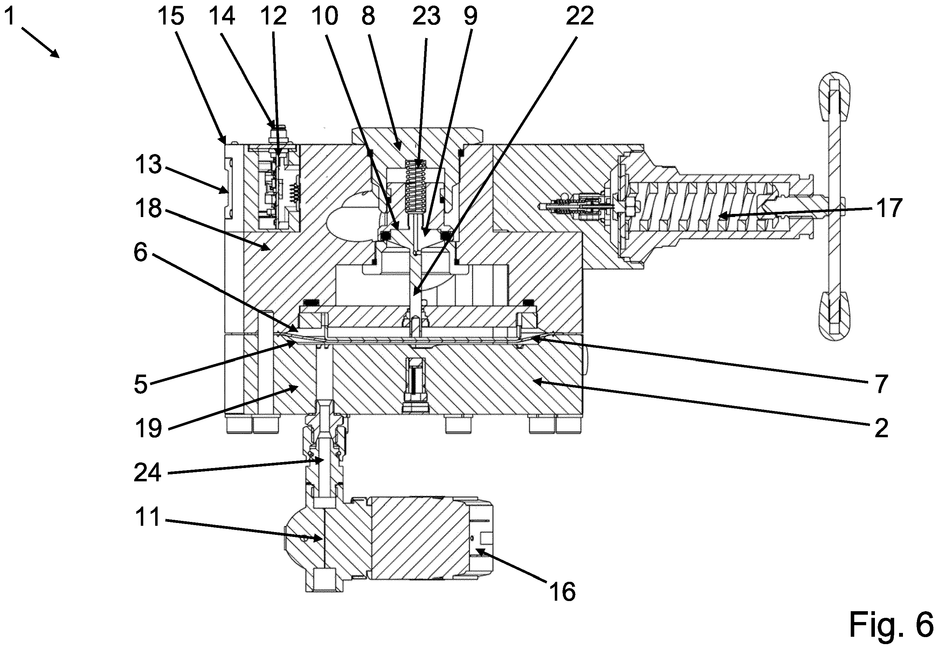

In Figur 6 ist eine Schnittansicht des Domdruckreglers 1 gemäß der Schnittebene B-B in Figur 5 gezeigt. Auch in dieser Darstellung ist die Gasleitung, wie in Figur 4, durch das Regelventil 8 abgesperrt. Hierzu ist der Ventilkörper 9 des Regelventils 8 auf der Ventilöffnung 10 angeordnet und trennt die Verbindung zwischen Gaseingang 3 und Gasausgang 4 ab. Mittels der Entlüftung der ersten Druckkammer 5 wird die Membran 7 durch die Federkraft der Druckfeder 23 und/oder durch den Druck in der zweiten Druckkammer 6 in die gezeigte Stellung bewegt, in welcher sie den Ventilkörper 9 des Regelventils 8 in die gezeigte Schließstellung bringt. Die zur Öffnung des Regelventils 8 mit Steuerdruck beaufschlagte, erste Druckkammer 5 ist in dieser Situation über das Entlüftungsventil 11 entlüftet. Das Entlüftungsventil 11 zur Entlüftung der ersten Druckkammer 5 ist in dem Ventilkasten 16 angeordnet, welcher mit dem Gehäuse 2 des Domdruckreglers 2 verbunden ist. Die Verbindung des Ventilkastens 16 mit dem Gehäuse 2 stellt eine Fluidverbindung 24 zwischen der ersten Druckkammer 5 und dem Entlüftungsventil 11 her, über welche das Steuergas aus der ersten Druckkammer 5 bei Öffnung des Entlüftungsventils 11 abgelassen werden kann. Zur Ansteuerung des Entlüftungsventils 11 ist erfindungsgemäß eine elektronische Steuereinheit 12 vorgesehen, die in Figur 6 durch die gezeigte Platine erkennbar ist. Die Steuereinheit 12 sitzt vorteilhafterweise in einem Schaltkasten 15, der mit dem Gehäuse 2 des Domdruckreglers 1 gekoppelt ist. Der Domdruckregler 1 verfügt zudem über einen nicht gezeigten Temperatursensor zur Erfassung der Temperatur des Gases in dem Gehäuse 2 oder in der Gasleitung. Die gezeigte Steuereinheit 12 ist dazu eingerichtet, das Entlüftungsventil 11 zur Entlüftung der ersten Druckkammer 5 anzusteuern, sofern der Temperatursensor eine Unterschreitung eines Schwellwertes der Gastemperatur erfasst. Mit der Entlüftung der ersten Druckkammer 5 über die Ansteuerung des Entlüftungsventils 11 kann die Ventilöffnung 10, wie gezeigt, schnell mit dem Ventilkörper 9 des Regelventils 8 verschlossen werden, um die Gasleitung abzusperren. Damit kann eine Versprödung und im schlimmsten Fall ein Bersten der Gasleitung verhindert werden, da ein Absinken der Temperatur in der Gasleitung wirksam durch das automatische Schließen des Regelventils 8 verhindert werden kann. Alternativ oder zusätzlich zum Temperatursensor kann der Domdruckregler 1 auch einen nicht gezeigten Volumenstromsensor zur Erfassung des Volumenstroms des geregelten Gases in dem Gehäuse 2 oder in der Gasleitung aufweisen. Die Steuereinheit 12 ist in diesem Fall dazu eingerichtet, das Entlüftungsventil 11 zur Entlüftung der ersten Druckkammer 5 anzusteuern, wenn der Volumenstromsensor eine Überschreitung eines Schwellwertes des Volumenstroms erfasst. Mit der Ansteuerung des Entlüftungsventils 11 und der Öffnung des Entlüftungsventils 11 kann die erste Druckkammer 5 schnell entlüftet werden, um die Ventilöffnung 10 mit dem Ventilkörper 9 des Regelventils 8 zu verschließen und die Gasleitung bei erhöhten Volumenströmen abzusperren. Dadurch kann eine Versprödung und im schlimmsten Fall ein Bersten der Gasleitung verhindert werden, da mit dem erhöhten Volumenstrom ein Absinken der Temperatur in der Gasleitung erfolgen kann, das zuverlässig durch das automatische Schließen des Regelventils 8 abgewendet werden kann. Das Entlüftungsventil 11 ist vorteilhafterweise als ein elektrisch ansteuerbares 2/2-Wege-Magnetventil ausgebildet, sodass eine besonders schnelle, automatische Ansteuerung durch die Steuereinheit 12 und ein zügiges Öffnen des Entlüftungsventils 11 zur Entlüftung der ersten Druckkammer 5 möglich ist. An dem Schaltkasten 15 ist zudem ein Display 13 angeordnet, mit dem sich die von den Sensoren erfasste Gastemperatur und/oder der erfasste Volumenstrom ablesen lassen. An dem Schaltkasten 13 ist außerdem eine Datenschnittstelle 14 der Steuereinheit 12 angeordnet, wobei die Datenschnittstelle 14 zur Kommunikation der Steuereinheit 12 mit einem externen Endgerät dient.

Mit dem beschriebenen Domdruckregler 1 kann eine automatische Absperrungsfunktion einfach und kompakt in den Domdruckregler 1 integriert werden, welche bevorzugt eine integrierte Absicherung der angeschlossenen Gasleitung gegen Beschädigungen durch Versprödung umfasst.

### Bezuaszeichenliste

1 Domdruckregler
2 Gehäuse
3 Gaseingang
4 Gasausgang
5 Erste Druckkammer
6 Zweite Druckkammer
7 Membran
8 Regelventil
9 Ventilkörper
10 Ventilöffnung
11 Entlüftungsventil
12 Steuereinheit
13 Display
14 Datenschnittstelle
15 Schaltkasten
16 Ventilkasten
17 Antrieb
18 Erstes Gehäuseteil
19 Zweites Gehäuseteil
20 abgewinkeltes Rohr
21 Rohröffnung
22 Stößel
23 Druckfeder
24 Fluidverbindung

## Patentansprüche

1. Domdruckregler (1) zum Regeln von Gasdruck und/oder Gasfluss in einer Gasleitung, mit
- einem Gehäuse (2), wobei das Gehäuse (2) mindestens einen Gaseingang (3) zum Anschluss an einen eingangsseitigen Abschnitt der Gasleitung und mindestens einen Gasausgang (4) zum Anschluss an einen ausgangseitigen Abschnitt der Gasleitung aufweist,
- wenigstens zwei Druckkammern (5, 6) in dem Gehäuse (2), wobei die Druckkammern (5, 6) durch eine flexible Membran (7) des Domdruckreglers (1) voneinander getrennt sind, wobei die erste Druckkammer (5) mit einem einstellbaren Steuerdruck beaufschlagbar ist und wobei die zweite Druckkammer (6) mit dem Gasausgang (4) fluidtechnisch in Verbindung steht,
- wenigstens einem Regelventil (8) mit einem beweglichen Ventilkörper (9) zum Öffnen und Schließen einer Ventilöffnung (10), über welche der Gaseingang (3) mit dem Gasausgang (4) verbindbar ist, wobei der Ventilkörper (9) mit der Membran (7) verbunden ist, sodass eine Bewegung der Membran (7) auf den Ventilkörper (9) übertragen wird, um den Gasdruck am Gasausgang (4) nach Maßgabe des einstellbaren Steuerdrucks in der ersten Druckkammer (5) zu regeln,
- wenigstens einem Entlüftungsventil (11) zur Entlüftung der ersten Druckkammer (5), und
- einer elektronischen Steuereinheit (12), wobei das Entlüftungsventil (11) über die Steuereinheit (12) zur Entlüftung der ersten Druckkammer (5) ansteuerbar ausgebildet ist
**gekennzeichnet durch**
einen Temperatursensor, der zur Erfassung der Temperatur des Gases in dem Gehäuse (2) oder in der Gasleitung und zur Übermittlung der erfassten Temperatur an die Steuereinheit eingerichtet ist, wobei die Steuereinheit (12) dazu eingerichtet ist, das Entlüftungsventil (11) zur Entlüftung der ersten Druckkammer (5) anzusteuern, um die Ventilöffnung (10) mit dem Ventilkörper (9) des Regelventils (8) zu verschließen, sofern der Temperatursensor eine Unterschreitung eines Schwellwertes der Gastemperatur erfasst, und/oder
einen Volumenstromsensor, der zur Erfassung des Volumenstroms des geregelten Gases in dem Gehäuse (2) oder in der Gasleitung und zur Übermittlung des erfassten Volumenstroms an die Steuereinheit eingerichtet ist, wobei die Steuereinheit (12) dazu eingerichtet ist, das Entlüftungsventil (11) zur Entlüftung der ersten Druckkammer (5) anzusteuern, um die Ventilöffnung (10) mit dem Ventilkörper (9) des Regelventils (8) zu verschließen, sofern der Volumenstromsensor eine Überschreitung eines Schwellwertes des Volumenstroms erfasst.

2. Domdruckregler (1) nach Anspruch 1, **gekennzeichnet durch** ein Display (13) zum Ablesen einer erfassten Gastemperatur bzw. eines erfassten Volumenstroms.

3. Domdruckregler (1) nach Anspruch 1 oder 2, **dadurch gekennzeichnet, dass** zwischen der Steuereinheit (12) und den Sensoren eine Signalverbindung besteht.

4. Domdruckregler (1) nach einem der vorhergehenden Ansprüche, **dadurch gekennzeichnet, dass** die Steuereinheit (12) eine Datenschnittstelle (14) zur Kommunikation mit einem externen Endgerät aufweist.

5. Domdruckregler (1) nach einem der vorhergehenden Ansprüche, **dadurch gekennzeichnet, dass** das Entlüftungsventil (11) ein elektrisch ansteuerbares 2/2-Wege-Magnetventil ist.

6. Domdruckregler (1) nach einem der vorhergehenden Ansprüche, **dadurch gekennzeichnet, dass** die Steuereinheit (12) in einem von dem Gehäuse (2) separaten, insbesondere an das Gehäuse (2) koppelbaren Schaltkasten (15) angeordnet ist.

7. Domdruckregler (1) nach einem der vorhergehenden Ansprüche, **dadurch gekennzeichnet, dass** das Entlüftungsventil (11) in einem vom Gehäuse (2) separaten, insbesondere an dem Gehäuse (2) koppelbaren, Ventilkasten (16) angeordnet ist.

8. Domdruckregler (1) nach Anspruch 6 und 7, **dadurch gekennzeichnet, dass** zwischen der Steuereinheit (12) im Schaltkasten (15) und dem Entlüftungsventil (11) im Ventilkasten (16) eine Signalverbindung besteht.

## Claims

1. Dome pressure regulator (1) for regulating gas pressure and/or gas flow in a gas line, comprising
- a housing (2), wherein the housing (2) comprises at least one gas inlet (3) for connection to an inlet-side portion of the gas line and at least one gas outlet (4) for connection to an outlet-side portion of the gas line,
- at least two pressure chambers (5, 6) in the housing (2), wherein the pressure chambers (5, 6) are separated from one another by a flexible membrane (7) of the dome pressure regulator (1), wherein an adjustable control pressure can be applied to the first pressure chamber (5), and wherein the second pressure chamber (6) is in fluidic connection with the gas outlet (4),
- at least one control valve (8) having a movable valve body (9) for opening and closing a valve opening (10) via which the gas inlet (3) is connectable to the gas outlet (4), wherein the valve body (9) is connected to the membrane (7) so that a movement of the membrane (7) is transmitted to the valve body (9) in order to regulate the gas pressure at the gas outlet (4) in accordance with the adjustable control pressure in the first pressure chamber (5),
- at least one vent valve (11) for venting the first pressure chamber (5), and
- an electronic control unit (12), wherein the vent valve (11) is designed so as to be controllable via the control unit (12) for venting the first pressure chamber (5),
**characterised by**
a temperature sensor configured to detect the temperature of the gas in the housing (2) or in the gas line and to transmit the detected temperature to the control unit, wherein the control unit (12) is configured to control the vent valve (11) for venting the first pressure chamber (5) to close the valve opening (10) with the valve body (9) of the control valve (8) if the temperature sensor detects that the gas temperature has dropped below a threshold value, and/or
a volumetric flow rate sensor configured to detect the volumetric flow rate of the regulated gas in the housing (2) or in the gas line and to transmit the detected volumetric flow rate to the control unit, wherein the control unit (12) is configured to control the vent valve (11) for venting the first pressure chamber (5) to close the valve opening (10) with the valve body (9) of the control valve (8) if the volumetric flow sensor detects that the volumetric flow exceeds a threshold value.

2. Dome pressure regulator (1) according to claim 1, **characterised by** a display (13) for reading a detected gas temperature and/or a detected volumetric flow rate.

3. Dome pressure regulator (1) according to claim 1 or 2, **characterised in that** there is a signal connection between the control unit (12) and the sensors.

4. Dome pressure regulator (1) according to any one of the preceding claims, **characterised in that** the control unit (12) comprises a data interface (14) for communication with an external terminal.

5. Dome pressure regulator (1) according to any one of the preceding claims, **characterised in that** the vent valve (11) is an electrically controllable 2/2-way solenoid valve.

6. Dome pressure regulator (1) according to any one of the preceding claims, **characterised in that** the control unit (12) is arranged in a switch box (15) separate from the housing (2), in particular capable of being coupled to the housing (2).

7. Dome pressure regulator (1) according to any one of the preceding claims, **characterised in that** the vent valve (11) is arranged in a valve box (16) separate from the housing (2), in particular capable of being coupled to the housing (2).

8. Dome pressure regulator (1) according to claims 6 and 7, **characterised in that** there is a signal connection between the control unit (12) in the switch box (15) and the vent valve (11) in the valve box (16).

## Revendications

1. Régulateur de pression à dôme (1) destiné à réguler une pression de gaz et/ou un écoulement de gaz dans une conduite de gaz, comportant
- un boîtier (2), le boîtier (2) présentant au moins une entrée de gaz (3) destinée au raccordement à une partie située côté entrée de la conduite de gaz et au moins une sortie de gaz (4) destinée au raccordement à une partie située côté sortie de la conduite de gaz,
- au moins deux chambres de pression (5, 6) dans le boîtier (2), les chambres de pression (5, 6) étant séparées l'une de l'autre par une membrane (7) flexible du régulateur de pression à dôme (1), la première chambre de pression (5) pouvant être soumise à l'action d'une pression de commande réglable et la seconde chambre de pression (6) étant en liaison fluidique avec la sortie de gaz (4),
- au moins une vanne de régulation (8) comportant un corps de vanne (9) mobile pour ouvrir et fermer un orifice de vanne (10), par le biais duquel l'entrée de gaz (3) peut être reliée à la sortie de gaz (4), le corps de vanne (9) étant relié à la membrane (7), de telle sorte qu'un mouvement de la membrane (7) est transmis au corps de vanne (9) pour réguler la pression de gaz à la sortie de gaz (4) conformément à la pression de commande réglable dans la première chambre de pression (5),
- au moins une vanne de purge d'air (11) destinée à évacuer l'air de la première chambre de pression (5) et
- une unité de commande électronique (12), la vanne de purge d'air (11) étant réalisée de manière à pouvoir être commandée par le biais de l'unité de commande (12) pour évacuer l'air de la première chambre de pression (5),
**caractérisé par**
un capteur de température, qui est conçu pour détecter la température du gaz dans le boîtier (2) ou dans la conduite de gaz et pour transmettre la température détectée à l'unité de commande, l'unité de commande (12) étant conçue pour commander la vanne de purge d'air (11) destinée à évacuer l'air de la première chambre de pression (5) pour fermer l'orifice de vanne (10) avec le corps de vanne (9) de la vanne de régulation (8) si le capteur de température détecte un passage en dessous d'une valeur seuil par la température de gaz, et/ou
un capteur de débit volumétrique, qui est conçu pour détecter le débit volumétrique du gaz régulé dans le boîtier (2) ou dans la conduite de gaz et pour transmettre le débit volumétrique détecté à l'unité de commande, l'unité de commande (12) étant conçue pour commander la vanne de purge d'air (11) destinée à évacuer l'air de la première chambre de pression (5) pour fermer l'orifice de vanne (10) avec le corps de vanne (9) de la vanne de régulation (8) si le capteur de débit volumétrique détecte un dépassement d'une valeur seuil par le débit volumétrique.

2. Régulateur de pression à dôme (1) selon la revendication 1, **caractérisé par** un écran (13) destiné à lire une température de gaz détectée ou un débit volumétrique détecté.

3. Régulateur de pression à dôme (1) selon la revendication 1 ou 2, **caractérisé en ce qu'**une liaison de signaux se trouve entre l'unité de commande (12) et les capteurs.

4. Régulateur de pression à dôme (1) selon l'une des revendications précédentes, **caractérisé en ce que** l'unité de commande (12) présente une interface de données (14) pour la communication avec un terminal externe.

5. Régulateur de pression à dôme (1) selon l'une des revendications précédentes, **caractérisé en ce que** la vanne de purge d'air (11) est une électrovanne 2/2 voies à commande électrique.

6. Régulateur de pression à dôme (1) selon l'une des revendications précédentes, **caractérisé en ce que** l'unité de commande (12) est disposée dans un coffret de commande (15) séparé du boîtier (2), en particulier pouvant être couplé au boîtier (2).

7. Régulateur de pression à dôme (1) selon l'une des revendications précédentes, **caractérisé en ce que** la vanne de purge d'air (11) est disposée dans une boîte de vanne (16) séparée du boîtier (2), en particulier pouvant être couplée au boîtier (2).

8. Régulateur de pression à dôme (1) selon les revendications 6 et 7, **caractérisé en ce qu'**une liaison de signaux se trouve entre l'unité de commande (12) dans le coffret de commande (15) et la vanne de purge d'air (11) dans la boîte de vanne (16).
